(19) Europäisches Patentamt
European Patent Office
Office européen des brevets

(11) EP 0 391 271 B2

(12) # NEUE EUROPÄISCHE PATENTSCHRIFT

(45) Veröffentlichungstag und Bekanntmachung des Hinweises auf die Entscheidung über den Einspruch:
**31.05.2000 Patentblatt 2000/22**

(45) Hinweis auf die Patenterteilung:
**14.12.1994 Patentblatt 1994/50**

(21) Anmeldenummer: **90106124.2**

(22) Anmeldetag: **30.03.1990**

(51) Int. Cl.$^7$: **C09D 151/00**, C09D 167/00

(54) **Wässriges hitzehärtbares überzugsmittel auf Polyester- und Acrylbasis, Verfahren zu dessen Herstellung und dessen Verwendung**

Aqueous and heat-curable coating composition based on polyester and acrylate, process for its preparation and its use

Composition de revêtement aqueuse et thermodurcissable à base de polyester et d'acrylate, son procédé de préparation et son utilisation

(84) Benannte Vertragsstaaten:
**AT BE DE ES FR GB IT NL SE**

(30) Priorität: **04.04.1989 DE 3910829**

(43) Veröffentlichungstag der Anmeldung:
**10.10.1990 Patentblatt 1990/41**

(73) Patentinhaber:
**Herberts Gesellschaft mit beschränkter Haftung**
**42285 Wuppertal (DE)**

(72) Erfinder:
- **Bederke, Klaus, Dr.**
  **D-4322 Sprockhövel (DE)**
- **Dücoffre, Volker**
  **D-5600 Wuppertal 1 (DE)**
- **Graef, Knut**
  **D-4320 Hattingen (DE)**

(74) Vertreter:
**Gille Hrabal Struck Neidlein Prop Roos**
**Patentanwälte**
**Brucknerstrasse 20**
**40593 Düsseldorf (DE)**

(56) Entgegenhaltungen:
**EP-A- 0 072 979** **EP-A- 0 241 938**
- **DATABASE WPI, Nr. 70-55775R, Derwent Publications Ltd, Londen, GB; & JP-A-45 022 011**



Printed by Xerox (UK) Business Services
2.16.7 (HRS)/3.6

**Beschreibung**

Die Erfindung betrifft die Verwendung eines wäßrigen hitzehärtbaren Überzugsmittels auf Polyester- und Acrylharzbasis, im Gemisch mit Aminharz und Neutralisationsmittel, das übliche Lackzusatzstoffe, Pigmente, Füllstoffe und/oder organische Lösemittel enthalten kann als klarlacke oder farbige Einschicht decklecke bei der Herstellung von Mehrschichtlackierungen in der Automobilindustrie.

Der Aufbau von Mehrschichtlackierungen ist insbesondere auf dem Sektor des Kraftfahrzeugsbaus bekannt. Dabei ist es günstig, auf eine Basislackschicht nach kurzer Antrocknungszeit "naß-in-naß" eine Klarlackschicht aufzubringen, worauf dann ein gemeinsames Einbrennen erfolgt.

Wäßrige Basislacke werden in der Literatur beschrieben und in der Praxis eingesetzt. Überzüge aus derartigen Basislacken werden in der Praxis jedoch noch mit nicht-wäßrigen Klarlacküberzügen versehen. In der DE-PS 28 06 497 wird zwar eine Mehrschichtlackierung mit einem Klarlacküberzug als Deckschicht beschrieben, wobei dieser Klarlack auch wasserverdünnbar sein soll; Beispiele für derartige wasserverdünnbare Klarlacke werden jedoch nicht angegeben. Als Basislack-Überzugsmittel werden Polyester mit hohem Molekulargewicht und hoher Viskosität, gelöst in Xylol, verwendet, die mit Acrylatharzen vermischt werden können. Derartige Lacke haben einen hohen Bedarf an Neutralisationsmittel und ergeben bei der Anwendung eine hohe Lösemittelemission.

Die DE-OS 37 12 442 beschreibt eine Mischung aus Polyester-Melaminharzaddukt mit Acrylharzen. Auch hier sind hohe Mengen an Neutralisationsmittel nötig.

In der EP-A-0 072 972 werden Bindemittel auf der Basis von Alkydacrylaten beschrieben, wobei der Einsatz flüchtiger Amine vermieden werden soll. Die Harze werden durch Acrylat-Polymerisation in wässrigen Dispersionen von durch nicht-flüchtige Amine neutralisierten Alkydharzen hergestellt; die erhaltenen Dispersionen werden erneut mit nicht-flüchtigen Aminen neutralisiert.

Die DE-OS 36 32 617 beschreibt wäßrige Beschichtungsmassen auf der Basis von hochviskosen Harzen, beispielsweise Polyesterharzen, in denen Harzpartikel, bei denen es sich um Acrylharze handeln kann, dispergiert sind. Die erhaltenen Massen sind instabil und unterliegen einer raschen Phasentrennung.

In der EP-A-0 206 072 werden Filmbildner auf der Basis von Acryl-Polymerprodukten beschrieben, die in einem Verdünnungsmittel mit einem Molekulargewicht über 200 hergestellt wurden, bei dem es sich unter anderem um einen Polyester handeln kann. Diese Filmbildner können jedoch nicht in wäßrigen Systemen eingesetzt werden.

Aufgabe der Erfindung ist die Bereitstellung von Mehrschichtlackierungen unter Verwendung von farbigen Einschichtdecklecken oder klarlacken, die eine hohe Stabilität bei geringem Lösemittelgehalt und geringer Menge an Neutralisationsmittel aufweisen.

Diese Aufgabe wird gelöst durch die Verwendung eines wäßrigen hitzehärtbaren Überzugsmittels auf Polyester- und Acrylharzbasis, im Gemisch mit Aminharz und Neutralisationsmittel das übliche Lackzusatzstoffe, Pigmente, Füllstoffe und/oder organische Lösemittel enthalten kann, das als Bindemittel enthält

A) 20 - 45 Gew.-% (bezogen auf den Festkörpergehalt des Bindemittels) eines Aminharzvernetzers und
B) 80 - 55 Gew.-% (bezogen auf den Festkörpergehalt des Bindemittels) eines nach Neutralisation mit Basen wasserlöslichen Polyesteroligomer-Polyacrylats mit einem Zahlenmittel des Molekulargewichts (Mn) von 800 bis 2000, hergestellt durch radikalische Polymerisation von 80 - 50 Gew.-% mindestens

a) eines hydroxyfunktionellen (Meth)acrylsäureesters und
b) einer monofunktionellen $\alpha,\beta$-ethylinesch ungesättigten Carbonsäure und
c) gegebenenfalls eines $\alpha,\beta$-ethylenisch ungesättigten Monomeren ohne funktionelle Gruppen

in 20 bis 50 Gew.-% eines hydroxyfunktionellen, radikalish nicht polymerisierbaren Polyesteroligomeren, erhältlich durch Polykondensation ausschließlich von aliphatischen Diolen, cycloaliphatischen Diolen, Dicarbonsäuren und deren Derivaten, mit aliphatischen Triolen oder Tetrolen mit 2 bis 6 Kohlenstoffatomen, mit einem errechneten Molekulargewicht von 200 bis 1000, einer Hydroxylzahl von 280 bis 600 und einer Säurezahl von 0 bis 1,5
wobei die Monomeren a), b) und c) in derartigen Mengen eingesetzt werden, daß das erhaltene Polyesteroligomer-Polyacrylat eine Hydroxylzahl von 150 bis 390 und eine Säurezahl von 16 bis 40 aufweist, als Klarlacke oder farbige Einschichtdecklecke bei der Herstellung von Mehrschichtluckierungen in der Automobilindustrie.

Das erfindungsgemäß verwendete Überzugsmittel enthält eine Bindemittelkomponente, die wie folgt hergestellt wird:0
Man legt 20 bis 50 Gewichtsteile eines hydroxyfunktionellen, radikalisch nicht polymerisierbaren Polyesteroligomeren, erhältlich aus den vorstehend definierten Diolen, Triolen und Tetrolen, sowie Dicarbonsäuren mit einem errechneten

Molekulargewicht von 200 bis 1000, bevorzugt 300 bis 600, einer OH-Zahl von 280 bis 600, bevorzugt 400 bis 500, einer Säurezahl von 0 bis 1,5 vor und polymerisiert darin 80 bis 50 Gewichtsteile mindestens

a) eines hydroxyfunktionellen (Meth)acrylsäureesters und
b) einer monofunktionellen α,β-ethylenisch ungesättigten Carbonsäure und gegebenenfalls
c) eines α,β-ethylenisch ungesättigten Monomeren ohne funktionelle Gruppen
in Anwesenheit eines Radikalinitiators.

Das errechnete Molekulargewicht $M_m$ wird ermittel nach T.C. Patton, Alkyd Resin Technology "Formulating Techniques and Allied Calculations", 1962, Seite 106 ff, wie folgt:

$$M_m = \frac{W}{(M_o - e_a) + \frac{W_{(AN)}}{56100}}$$

$M_m$ = Mittleres Molekulargewicht
W = Gewicht aller Komponenten abzüglich Kondensationswasser
$M_o$ = Anzahl aller Mole
$e_a$ = Äquivalente der Säure
$W_{(AN)}$ = Säurezahl des Polyesteroligomeren

Das Polyesteroligomere kann zur Herstellung des Polyesteroligomer-Polyacrylat ohne Lösemittel als alleiniges Reaktionsmedium eingesetzt werden.

Bei der Herstellung des Polyesteroligomeren-Polyacrylats kann aber auch ein mit Wasser verträgliches oder in Wasser lösliches Lösemittel für das Polyesteroligomere zugesetzt werden.

Geeignete Lösemittel sind bevorzugt solche, welche unbeschränkt mit Wasser mischbar sind. Z.B. einwertige aliphatische Alkohole wie solche mit 2 bis 4 Kohlenstoffatomen, z.B. Ethanol und Isopropanol oder Ketone, z.B. Aceton oder Methylethylketon oder Glykolether wie z.B. Methyglykol, Ethylglykol, Butoxyethanol, Methoxypropanol, Ethoxypropanol, und Methoxypropxypropanol oder Diole wie z.B. Ethylenglykol und Propylenglykol oder Polyetherdiole wie z.B. Polyethylenglykol und Polypropylenglykol oder alle anderen mit Wasser unbeschränkt mischbaren Lösemittel anderer Verbindungsklassen bzw. der Gemische der vorgenannten Verbindungen bzw. Verbindungsklassen. Anteilig können aber auch solche Lösemittel Verwendung finden, welche nur beschränkt oder gar nicht mit Wasser mischbar sind, und zwar in solchen Mengen, daß es nicht zu Trübungen der Harzlösungen bzw. der daraus hergestellten Lacke kommt. Die Lösemittel bzw. deren Gemische haben die Aufgabe, den Harzlösungen den daraus hergestellten Wasserlackzusammensetzungen ganz bestimmte unter anderem für die spätere Verarbeitung notwendige und vorgegebene Eigenschaften zu geben.

Die erfindungsgemäß verwendeten Überzugsmittel weisen den Vorteil auf, daß sie nur geringe Mengen von organischen Lösemitteln enthalten. Bei diesen geringen Mengen handelt es sich bevorzugt um die für die Herstellung des Polyesteroligomer-Polyacrylats verwendeten, die während der Herstellung eingeführt oder anschließend bei der Formulierung der Überzugsmittel zugesetzt wurden. Besonders bevorzugt sind aliphatische Monoalkohole mit 2 bis 4 Kohlenstoffatomen.

Die in den Überzugsmitteln enthaltenen Lösemittel liegen beispielsweise in Mengen von 5 bis 20 Gew.-%, bezogen auf das applikationsbereite Überzugsmittel (enthaltend Aminharz, Polyesteroligomer-Polyacrylat und Additive, sowie gegebenenfalls Pigmente, Füllstoffe usw.), vor.

Trotz der geringen Lösemittelanteils kann der Feststoffgehalt der Überzugsmittel sehr hoch sein. Beispielsweise sind klare-, pigment- und füllstoffreie Zusammensetzungen bis zu 50% Festkörperanteil erhältlich. Sie sind lagerstabil und können je nach Bedarf für die Application bevorzugt mit Wasser auf Applikationsviskosität verdünnt werden.

Darüberhinaus ergibt sich durch die geringe Säurezahl der eingesetzten Bindemittel der Vorteil eines geringen Bedarfs an Neutralisationsmitteln (z.B. Amin), was wiederum eine geringere Inhibierung bei der Vernetzung mit Aminharzen, z.B. Melaminharz, durch den niedrigen im Film verbleibenden Aminanteil bewirkt.

Das bei der Herstellung der Polyesteroligomer-Polyacrylat-Komponente des Bindemittels als Reaktionsmedium verwendete Polyesteroligomere kann aus den vorstehend definierten Polyolen, Dicarbonsäuren und Diolen hergestellt werden. Die Ausgangsmaterialien sind frei von olefinischen Doppelbindungen, so daß das erhaltene Produkt keine radikalische Polymerisation eingehen kann.

Die Polykondensation erfolgt nach üblichen, dem Fachmann geläufigen Verfahren, beispielsweise in Gegenwart von üblichen Veresterungskatalysatoren und bei erhöhten Temperaturen von z.B. 180 bis 230°C in der Schmelze.

Beispiele für aliphatische Triole und Tetrole mit 2 bis 6 Kohlenstoffatomen, sind Trimethylolethan, Trimethylolpropan, Glycerin, 1,2,4-Butantriol, 1,2,6-Hexantriol und Pentaerythrit.

Beispiele für die Dicarbonsäuren sind aliphatische gesättigte Dicarbonsäuren, wie z.B. Bernsteinsäure, Adipinsäure, Azelainsäure, Sebacinsäure; cycloaliphatische gesättigte Dicarbonsäuren und aromatische Dicarbonsäuren, wie Phthalsäure, Isophthalsäure, Tetra-, Hexa-, Endomethylentetra-hydrophthalsäure, Endoethylentetrahydrophthalsäure und Cyclohexandicarbonsäure (1.2, 1.3 und 1.4), Muconsäure und Camphersäure, oder gegebenenfalls deren mögliche Anhydride.

Beispiele für verwendbare aliphatische Diole sind Ethylenglykol, Propylenglykol (1.3 und 1.2), Butandiol, Hexandiol (1.6), Neopentylglykol; und Beispiele für cycloaliphatische Diole, sind 1.3-Dimethylolcyclohexan und 1.4-Dimethylolcyclohexan.

In dem Polyesteroligomeren oder dessen Lösung in einem Monoalkohol werden ein hydroxyfunktioneller (Meth)acrylatester, eine monoethylenisch ungesättigte Säure und/oder ein (Meth)acrylsäureester ohne Hydroxyfunktionen, entweder allein oder im Gemisch, einer radikalischen Polymerisation in Anwesenheit eines Radikalinitiators unterzogen. Beispiele für Radikalinitiatoren sind:

Dialkylperoxide, wie Di-tert.-Butylperoxid, Di-cumylperoxid; Diacylperoxide, wie Di-benzoylperoxid, Di-lauroylperoxid; Hydroperoxide, wie Cumolhydroperoxid, tert.-Butylhydroperoxid; Perester, wie tert.-Butyl-perbenzoat, tert.-Butylperpivalat, tert.-Butyl-per-3,5,5-trimethylhexanoat, tert.-Butyl-per-2-ethylhexanoat; Peroxidicarbonate, wie Di-2-ethylhexyl-peroxydicarbonat, Dicyclohexyl-peroxydicarbonat; Perketale, wie 1,1-Bis-(tert.-Butylperoxy)3,5,5-trimethylcyclohexan, 1,1-Bis(tert.-Butylperoxy)cyclohexan; Ketonperoxide, wie Cyclohexanonperoxid, Methylisobutylketonperoxid und Azo-Verbindungen, wie 2,2′-Azo-bis(2,4-dimethylvaleonitril), 2,2′-Azo-bis(2-methylbutyronitril), 1,1′-Azo-bis-cyclohexancarbonitril, Azo-bis-isobutyronitril.

Die Polymerisationsinitiatoren werden im allgemeinen in einer Menge von 0,1 bis 4 Gew.-%, bezogen auf die Monomeren-Einwaage, zugesetzt.

Beispiele für die $\alpha,\beta$-ethylenisch ungesättigten Monomeren der Komponente B) c) ohne funktionelle Gruppen sind: (Meth)acrylsäureester von Alkoholen mit 1 bis 12 Kohlenstoffatomen in der Kette, wie z.B. Methyl-, Ethyl-, n-Propyl-, Isopropyl-, Butyl(n-, iso- und tert.-), Hexyl-, 2-Ethylhexyl- und Lauryl-Alkohol, sowie aromatische Vinylverbindungen, wie Styrol, Vinyltoluol und $\alpha$-Methylstyrol.

Beispiele für die verwendbaren hydroxyfunktionellen (Meth)acrylester der Komponente B) a) sind (Meth)acrylester des Ethylenglykols, Propylengylkols (1.2 und 1.3), Butandiols (1.4), Hexandiols (1.6), sowie Polyethylenglykolmono(meth)acrylat mit 6 bis 8 Ethylenglykoleinheiten und n-Propylenglykolmono(meth)acrylat mit 5 bis 6 Propylenglykoleinheiten. Bevorzugte Beispiele sind Hydroxyalkyl(meth)acrylat-Lacton Addukte, wie Hydroxyethylacrylat-Caprolacton-Addukte, z.B. aus 0,5 bis 3 Mol Caprolacton pro 1 Mol Hydroxyethylacrylat, Butandiol(1.4)mono(meth)acrylat, Polypropylenglykolmono(meth)acrylat und Polyethylenglykolmono(meth)acrylat.

Beispiele für die $\alpha,\beta$-ethylenisch ungesättigten Carbonsäuren der Komponente B) b) sind Acrylsäure oder Methacrylsäure sowie Maleinsäure und Fumarsäure und deren Halbester mit aliphatischen Alkoholen.

Das in dem erfindungsgemäßen Überzugsmittel als Vernetzer eingesetzte Aminharz ist jeder übliche Aminharzvernetzer, wie er auf dem Lacksektor eingesetzt wird, sofern er wasserlöslich ist, oder durch Zusatz organischer Lösemittel wasserlöslich gemacht werden kann. Bei den Lösemitteln handelt es sich um die vorstehend zur Herstellung der Polyesteroligomer-Polyacrylate und die Herstellung der Lacke beschriebenen mit Wasser verträglichen bzw. wasserlöslichen organischen Lösemittel. Die wasserlöslichen oder nach Zusatz von organischen Lösemitteln in Wasser löslichen Aminharze werden nach bekannten Verfahren ( wie z.B. in Ullmanns Enzyklopädie der Technischen Chemie, Band 3, Seite 475-496, 1953 und in Houben-Weyl, Methoden der Organischen Chemie, Band 14/2,Seite 319-388,1963, beschrieben) durch Umsetzung von Aldehyden, insbesondere Formaldehyd mit mehreren Amino- oder Iminogruppen tragenden Verbindungen, wie z.B. Melamin, Harnstoff, Dicyandiamid und Benzoguanamin oder Gemischen derartiger Produkte hergestellt. Sie sind üblicherweise mit 1 bis 6, bevorzugt 1 bis 4, Kohlenstoffatome aufweisenden aliphatischen Alkoholen ganz oder teilweise verethert, wobei Methanol, Ethanol und n- und iso-Butanol zur Veretherung besonders bevorzugt sind. In besonderem Maße sind geeignet hochiminofunktionelle Melaminformaldehydharze, wie z.B. die Handelsprodukte Cymel 323 und 325, partiell methylierte Melaminformaldehydharze, wie z.B. die Handelsprodukte Cymel 373, 385 oder hochmethylolierte Melaminformaldehydharze, wie z.B. die Handelsprodukte Cymel 300 und 301 (Cymel ist ein eingetragenes Warenzeichen). Derartige bevorzugte Melaminformaldehydharze enthalten vorzugsweise die folgenden funktionellen Gruppen

Methoxymethylimino 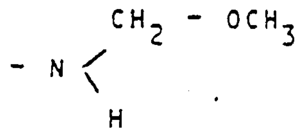

Methoxymethylmethylolamino 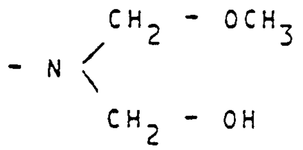

Di-(methoxymethyl)amino 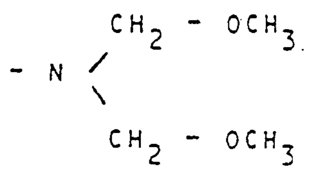

Zur Herstellung der Überzugsmittel werden die Polyesteroligomer-Polyacrylate einer Neutralisation mit Basen unterzogen. Als Basen dienen insbesondere die auf dem Lacksektor üblichen Amine, wobei es sich bevorzugt um flüchtige organische niedermolekulare Amine oder um Ammoniak handelt. Die Neutralisation des Polyesteroligomer-Polyacrylats erfolgt gegebenenfalls unter Erwärmen zur Erzielung einer günstigen Arbeits-Viskosität oder nach Zusatz von wasserverträglichen bzw. wasserlöslichen organischen Lösemitteln. Die Base wird in einer derartigen Menge zugegeben, daß der pH-Wert des erzielten neutralisierten Produktes bei etwa 7,0 bis 10, bevorzugt 7,5 bis 9 liegt.

Die Neutralisation kann in Anwesenheit des Aminharzvernetzers sowie üblicher Additive erfolgen. Aminharzvernetzer und Additive können jedoch auch nach der Neutralisation zu dem Polyesteroligomer-Polyacrylat gefügt werden. Das erhaltene neutralisierte Produkt wird bevorzugt nach Zusatz des Aminharzvernetzers und weiterer Additive sowie gegebenenfalls Lösemitteln mit Wasser in einer derartigen Menge versetzt, daß eine zur Lagerung und für den Transport geeignete Viskosität erhalten wird. Ein derartiges Konzentrat kann dann beispielsweise unmittelbar vor der Verwendung mit weiterem Wasser, gegebenenfalls zusammen mit weiteren Lösemitteln, auf die geeignete Anwendungs-Viskosität verdünnt werden. Die derart erhaltenen Überzugsmittel weisen im Anwendungszustand einen auf das Gesamtgewicht von Wasser,Lösemittel, Aminharz, Polyesteroligomer-Polyacrylat und weitere Additive , wie beispielsweise Pigmente und Füllstoffe etc. bezogenen Festkörpergehalt von bis zu 65% auf. Bei Klarlacken, die keine Pigmente oder Füllstoffe enthalten, liegt dieser Festkörperanteil beispielsweise bis zu 50 Gew.-%.

Hierbei ergibt sich erfindungsgemäß der Vorteil, daß bezogen auf den Gesamt-Lösemittelgehalt ein sehr hoher Festkörperanteil erzielt wird.

Die Überzugsmittel können als Klarlacke sowie als pigment- bzw. füllstoffhaltige Lacke formuliert werden. Zur Formulierung werden übliche Zusatzstoffe zugesetzt, wie beispielsweise Verlaufsmittel, Entlüftungsmittel, Dispergierhilfen, Lichtschutzmittel, Antiabsetzmittel. Neben derartigen üblichen Lackzusatzstoffen können, falls keine Klarlacke formuliert werden, Pigmente und Füllstoffe zugesetzt werden. Es handelt sich dabei um die üblichen auf dem Lacksektor je nach Anwendungsgebiet verwendeten anorganischen und organischen Pigmente sowie Füllstoffe.

Die Überzugsmittel können, wie erwähnt, als Klarlacke formuliert werden. Derartige Klarlacke enthalten keine Pigmente und Füllstoffe. Sie können allerdings übliche Zusatzstoffe, wie beispielsweise vorstehend angegeben, enthalten.

Die Überzugsmittel haben ausgezeichnete anwendungstechnische Eigenschaften. Sie sind daher auch zur Verwendung als farbige Einschicht-Decklacke geeignet. Eine Überlackierung mit einem Klarlack ist nicht erforderlich.

Die Überzugsmittel können durch übliche Applikationstechniken aufgebracht werden. Die bevorzugte Auftragstechnik ist Spritzen. Der Spritzauftrag kann unter Anwendung üblicher Spritztechniken erfolgen. Die erfindungsgemäßen Überzugsmittel können in üblichen Schichtstärken aufgetragen werden. Überraschenderweise hat es sich gezeigt, daß bereits bei sehr geringen Schichtdicken von beispielsweise 20 µm optisch einwandfreie Oberflächen erzielt werden. Darüberhinaus ist es möglich, mit den erfindungsgemäßen Überzugsmitteln auch hohe Schichtdicken zu erzielen.

Die hergestellten überzüge werden durch Einbrennen gehärtet. Bevorzugte Einbrenntemperaturen liegen

bei 130 bis 160° bei Einbrennzeiten zwischen 15 und 30 Minuten. In manchen Fällen kann es günstig sein, den Einbrennvorgang katalytisch zu steuern. Zu diesem Zwecke können übliche Härtungskatalysatoren zugesetzt werden. Es können handelsübliche Produkte eingesetzt werden, wie blockierte oder nicht-blockierte Sulfonsäuren und deren Derivate. Besonders günstig ist es, derartige Katalysatoren dem Überzugsmittel dann zuzusetzen, wenn als Vernetzer Melaminharze vom hochmethylolierten Typ eingesetzt werden, wie die Handelsprodukte Cymel 300 und 301.

Die Überzugsmittel sind hervorragend als wäßrige Klarlacke geeignet, die in der Automobilindustrie bei Mehrschichtlackierungen als Decklacke Verwendung finden. Sie zeichnen sich gegenüber den konventionellen organische Lösemittel enthaltenden Systemen besonders durch den geringen Gehalt an Lösemitteln bei gleichzeitig hohen Festkörper und niedriger Viskosität aus. Sie zeichnen sich dementsprechend durch eine besondere Umweltfreundlichkeit aus.

Die Überzugsmittel können bei der Verwendung als Klarlacke naß-in-naß auf einen wäßrigen oder nichtwäßrigen Basislack aufgebracht werden. Die naß-in-naß-Applikation schließt eine Antrocknung des Basislacks vor der Applikation des Klarlacks nicht aus; gemeinsam wird die Härtung bzw. der Einbrennvorgang durchgeführt.

Überraschenderweise zeigen die aus den beanspruchten Bindemitteln hergestellten Lackfilme ein gleich hohes Eigenschaftsniveau wie die bekannten lösemittelhaltigen Systeme. Eigenschaften, wie z.B. Oberflächenhärte, Klarheit, Glanz, Fülle, Verlauf, Kratzfestigkeit, Elastizität, Beständigkeit gegen Lösemittel, gegen Pflegemittel, gegen bestimmte Chemikalien, wie z.B. Bremsflüssigkeit, Diesel-und Ottokraftstoff, Kurz- und Langzeitbewitterungsbeständigkeit sind gleich wie bei den bekannten lösemittelhaltigen Systemen; sie sind zum Teil auch besser.

Die erfindungsgemäßen Überzugsmittel können jedoch auch als farbige Decklecke eingesetzt werden und zu diesem Zweck beispielsweise Pigmente, Füllstoffe usw., wie sie auf diesem Sektor üblich sind, enthalten.

Die in den Überzugsmitteln enthaltenen Bindemittel zeigen ein gutes Pigmentbenetzungsvermögen, so daß es auch möglich ist, die erfindungsgemäßen Überzugsmittel als farbige Einschichtdecklacke zu verwenden, die zu hochglänzenden Überzügen mit ausgezeichneter Glanzhaltung und guten mechanisch technologischen Eigenschaften führen.

Zusammenfassend werden erfindungsgemäß Überzugsmittel verwendet, die aufgrund des geringen Lösemittelgehalts und des geringen Bedarfs an Neutralisationsmitteln besonders umweltverträglich sind. Durch den geringen Anteil an Neutralisationsmitteln, wie Aminen, erfolgt eine geringe Inhibierung der Vernetzung durch Melaminharze, wodurch sich eine gute mechanische und chemische Beständigkeit der erhaltenen Überzüge ergibt. Die Überzüge weisen eine gute Wetterbeständigkeit auf (sie entsprechen den neuesten Anforderungen die durch den KFA-Test bestimmt werden, es handelt sich dabei um den Kanten-Filter-Test A, der beschrieben wird in VDA-Prüfblatt 621-4, 3 Punkt 2, Juli 1983).

Die Überzugsmittel weisen eine gute Lagerstabilität als Lack auf. Der Anteil organischer Lösemittel in den Bindemitteln ist gering, wodurch sich ein größerer Spielraum für Lösemittelkombinationen bei der Lackformulierung ergibt.

Darüberhinaus sind milde Lösemittel, wie Alkohole, z.B. Ethanol möglich. Hierdurch wird eine gute Lösemittelabgabe (einschließlich Wasser) erzielt, wodurch eine rasche Anatrocknung ermöglicht wird. Es resultiert eine gute Ablaufsicherheit. Durch den geringen Lösemittelanteil bei hohem Feststoffgehalt sowie die Verwendung von Wasser werden umweltverträglich Systeme bereitgestellt.

Die folgenden Beispiele dienen zur Erläuterung der Erfindung.

<u>Herstellung eines Polyesteroligomeren</u>

**Beispiel 1:**

336,7 g Trimethylolpropan, 366,8 Adipinsäure und 297 g Hexandiol werden mit 5 g unterphosphoriger Säure in einem mit Rührer, Abscheider, Thermometer und Rückflußkühler versehenen 2-Liter-Dreihalskolben bei 180°C bis 230°C in der Schmelze auf eine Säurezahl von 20 verestert.

Anschließend wird unter Vakuum bis zu einer Säurezahl < 1,5 kondensiert.

Das so erhaltene Produkt hat einen Einbrennrückstand von 94,5% (1 h, 150°C), eine Viskosität von 3200 mPas (100%ig), eine Hydroxylzahl von 466 und eine Farbzahl von 30 Hazen.

<u>Herstellung von Polyesteroligomer-Polyacrylaten</u>

**Beispiel 2 a:**

717 g Polyesteroligomer aus Beispiel 1 werden mit 597 g Ethanol in einem Rührer, Rückflußkühler, Tropftrichter und Thermometer versehenen 4-Liter-Dreihalskolben auf 81°C bis zum Rückfluß erhitzt.

Anschließend wird in 4 Stunden eine Mischung aus 552 g Butandiolmonoacrylat, 996 g tert. Butylacrylat, 74

g Acrylsäure und 50 g Vazo 67 (2,2-Azo-bis-2-Methylbutyronitril) zugetropft und anschließend 4 Stunden nachpolymerisiert.

Das Produkt hatte einen Einbrennrückstand von 79,8% (1 h 150°C) bei einer Viskosität von 7200 mPas (DIN 53015), eine Säurezahl von 26,3, eine OH-Zahl von 231 und eine Farbzahl von 60 Hazen.

**BEISPIEL 2b:**

717 g des Oligoesters aus Beispiel 1 werden mit 311 g Butoxyethanol in einem mit Rührer, Rückflußkühler, Tropftrichter und Thermometer versehenen 4-Liter-Dreihalskolben vorgelegt und auf 140° erhitzt.

Anschließend wird in 4 Stunden eine Mischung aus 552 g Butandiolmonoacrylat, 946 g tert. Butylacrylat, 74 g Acrylsäure und 100 g Trigonox C (tert. Butylperbenzoat) zugetropft und 4 Stunden nachpolymerisiert.

Das Produkt hatte einen Einbrennrückstand von 84,0% (1 h 150°C) gemäß DIN 53182, eine Viskosität von 15830 mPas (DIN 53015), eine Säurezahl von 38.0 mg KOH/1 g FK. (DIN 53402), eine OH-Zahl von 231 mg KOH/1 g FK. (DIN 53240) und eine Farbzahl von 60 Hazen (DIN 53409).

<u>Herstellung von wasserverdünnbaren Klarlacken</u>

**BEISPIEL 3a:**

651,2 g des im Beispiel 2a beschriebenen Polyesteroligomer-Polyacrylats 1, 348 g eines hochiminofunktionellen Melaminharzes und 152,8 g Ethanol wurden unter einem Laborrührer gut vorgemischt und unter weiterem Rühren mit einem Gemisch aus 50,7 g Butoxyethanol, 20,7 g eines UV-Absorbers vom Benztrialzoltyp und 13,7 g eines Radikalfängers vom HALS-Typ versetzt. Danach wurde unter Rühren mit 27 g Dimethylethanolamin neutralisiert, weitere 15 Minuten gerührt und anschließend mit einem Gemisch aus 972,6 g vollentsalztem Wasser und 15,4 g Ethanol verdünnt. Der Lack hatte eine Viskosität von 31 Sekunden (gemessen im DIN-4-Becher bei 20°C) und einen pH-Wert von 9,0. Der Lack wurde mit einem Drahtrakel auf eine Glasplatte aufgezogen, bei 80° 15 Minuten vorgetrocknet und 20 Minuten bei 140°C eingebrannt. Der erhaltene Lackfilm war klar und hochglänzend und wies bei einer Schichtdicke von 35 µm eine Pendelhärte von 170 Sekunden, gemessen nach König, auf. Ein nach gleicher Art auf einem blanken Eisenbleck (Erichsen-Blech) hergestellter Lackfilm wies eine Tiefung nach Erichsen von 6,3 mm auf.
(HALS = hindered amine light stabilisator)

**BEISPIEL 3b:**

639,7 Gewichtsteile der im Beispiel 2b beschriebenen Lösung des Polyesteroligomer-Polyacrylat-Harzes wurden mit 375,3 Gewichtsteilen eines handelsüblichen, methoxymethyliminofunktionellen wasserverdünnbaren Melaminharzes und 90,5 Gewichtsteilen Butoxyethanol unter einem Schnellrührer homogen vermischt. Danach wurde dieses Harz-Lösungsmittelgemisch mit 37,6 Gewichtsteilen Dimethylethanolamin versetzt und 15 Minuten lang gerührt, weitere 37,27 Gewichtsteile eines Gemisches bestehend aus 59,9 Gew.-% eines UV-Absorbers vom Benztriazol-Typ und 40,1 Gew.-% eines Radikalfängers vom HALS-Typ zugegeben und bis zur Klar- und Schlierenfreiheit gerührt. Unter Rühren wurden dann 534,1 Gewichtsteile vollentsalztes Wasser innerhalb von 5 Minuten zugegeben. Nach 24 Stunden hatte der Lacke eine Viskosität von 50 Sekunden (DIN-4-Becher bei 20°C) und einen pH-Wert von 8.6. Der Lack war mehr als 3 Monate lagerstabil. Der Lack wurde mit einem Drahtrakel auf eine Glasplatte aufgezogen, 15 Minuten bei 85°C vorgetrocknet und 20 Minuten bei 140° eingebrannt. Man erhielt einen klaren, farblosen harten und kratzfesten Lackfilm mit einer Schichtdicke von 40 µm und einer Ob erflächenhärte von 172 Pendelsekunden (gemessen nach König). Ein mit Methylethylketon getränktes Filzstück wurde auf dem Lackfilm 100 x hin- und her bewegt (= 100 Doppelhübe). Der Lackfilm behielt nach dieser Belastung seinen ursprünglichen Glanz; es trat keine Erweichung auf. Der Lack wurde auf ein blankes Eisenblech (sog. Erichsenblech) wie bei der Glasplatte beschrieben aufgetragen und wie beschrieben eingebrannt. Das so lackierte Blech hatte einen Tiefungswert nach Erichsen von 6,6 mm. Der Lack wurde in einer 30 m langen Ringleitung 120 Stunden lang permanent umgepumpt. Nach dieser Belastung zeigten sich keine Veränderungen bei Viskosität und pH-Wert. Der Lack ließ sich auf den verschiedensten Lackauftragsgeräten wie z.B. mit der Fließbecherpistole, aus dem Druckgefäß, auf Spritzrobotern und auf Hochrotationsglocken mittels Elektrostatik hervorragend verarbeiten.

<u>Herstellung eines weißen, wasserverdünnbaren Basislackes</u>

**BEISPIEL 4:**

175,7 g Polyesteroligomer-Polyacrylat gemäß Beispiel 2 b, 15,4 g Butoxyethanol, 14,2 g Dimethylethanolamin, 11,2 g einer 75%igen Lösung eines Entschäumers vom Typ der symmetrischen Acetylenglykole in Ethylenglykol, 54,4 g vollentsalztes Wasser und 269,7 g Titandioxid vom Rutiltyp wurden in angegebener Reihenfolge nacheinander unter einem Labordissolver homogen gemischt und 15 Minuten lang vordispergiert und anschließend auf einer Laborperlmühle vom Typ Drais PM 1 mit Keramikperlen mit einem Durchmesser von 1,6 bis 2,5 mm 30 Minuten lang bei einer Temperatur von 40°C vermahlen. Nach Abtrennung der Perlen über ein Sieb wurde das erhaltene Lackkonzentrat mit 10,56 g Isopropanol, 10,56 g Butoxyethanol und 55,1 g vollentsalztem Wasser auf eine Viskosität von etwa 90 DIN-Sekunden (gemessen im DIN-4-Becher bei 20°C) verdünnt. Vor der Verarbeitung wurde der Lack durch Einrühren von weiterem vollentsalzten Wasser auf eine Spritzviskosität von 35 bis 40 DIN-4 Sekunden (gemessen im AK4-Becher bei 20°C) eingestellt.

Herstellung einer weißen Mehrschichtlackung

**BEISPIEL 5:**

Der im Beispiel 4 beschriebene weiße, wasserverdünnbare Basislack wurde mittels Spritzen aus einer Fließbecherpistole in einer Schichtdicke (gemessen nach dem Vertrocknen) von 25 bis 30 µm auf ein mit einer kathodischen Tauchgrundierung und einem Einbrennfüller vorbehandelten, zinkphosphatierten Eisenblech aufgetragen und 15 Minuten bei 85°C vorgetrocknet. Danach wurde der im Beispiel 3b beschriebene Wasserklarlack nachdem er durch Zugabe von 14 Gew.-% eines Gemisches bestehend aus 94 Gew.-% vollentsalztem Wasser und 5 Gew.-% Butoxyethanol auf eine Spritzviskosität von 35 DIN-Sekunden (gemessen im AK4-Becher bei 20°C)eingestellt wurde, mit einer Fließbecherpistole in einer Schichtdicke aufgetragen, daß nach dem Einbrennen eine Trockenfilmdicke von ca. 30 bis 35 µm erreicht wurde.Nach dem Spritzen wurde das Blech 15 Minuten bei 85°C vorgetrocknet und dann 20 Minuten bei 140°C eingebrannt. Man erhielt einen weißen, hochglänzenden, harten und kratzfesten Lackfilmaufbau mit gutem Verlauf. Das so lackierte Probeblech wurde 120 Stunden in 40°C warmen Wasser gelagert. Nach dieser Belastung war die Lackfläche blasen- und kräuselfrei und zeigte keine Erweichung; der ursprüngliche Glanz bleibt erhalten. Ein weiteres Blech im beschriebenen Aufbau wurde 240 Stunden dem Schwitzkastentest nach DIN 50017 unterworfen. Der Lackfilm zeigte danach keine Veränderungen.

Herstellung eines wasserverdünnbaren 2-Schicht Metalleffekt-Aufbaus

**BEISPIEL 6:**

Auf ein mit einem kathodischen Elektrotauchlack und einem Füller vorbehandeltes zinkphosphatiertes Eisenblech wird ein üblicher wasserverdünnbarer Metallisbasislack, basierend auf einer Polyurethandispersion (DE 36 28 124 A 1-Beispiel 1- Seite 14, Zeilen 59-67 und Seite 15, Zeilen 1-10), mit einer Fließbecherspritzpistole in einer solchen Menge in 2 Auftragsschritten aufgebracht, daß eine Gesamttrockenfilmschichtdicke von 15 µm erhalten wird. Der Metallicbasislack wird 5 Minuten bei 80°C vorgetrocknet und danach mit einem wasserverdünnbaren Klarlack gemäß Beispiel 3b in zwei Auftragsschritten in einer solchen menge mit einer Fließbecherspritzpistole aufgetragen, daß eine Gesamttrockenfilmdicke von 30 bis 35 µm des Klarlacks resultiert. Nach dem Spritzen beläßt man das lackierte Blech 5 Minuten bei einer Temperatur von 23°C und einer relativen Luftfeuchte von 50%, trocknet danach 15 Minuten bei 70 bis 80°C vor und brennt anschließend 20 Minuten bei 140°C ein. Man erhält einen hochglänzenden, gleichmäßigen Metalleffekt, wie er in der Praxis gefordert wird. Der Lackfilm ist hochkratzfest. Der Film wird 100 mal durch Hin- und Herreiben mit einem mit Methylethylketon getränkten Filz belastet. Dabei tritt kein Anquellen und keine Vermattung des Lackfilmes auf.

Herstellung eines weißen Einbrennlackes:

**Beispiel 7 :**

223,6 g des in Beispiel 2b benannten Bindemittels werden mit 18,64 g Butoxyethanol, 9,2 g eines Entschäumers auf Basis eines symetrischen Acetylenglykols 75%ig gelöst in Ethylenglykol, 0,8 g eines Additivs zur Vermeidung von Oberflächenstörungen Additol X W 329 (eingetragenes Warenzeichen) und 18,64 g Dimethylethanolamin versetzt und 15 Minuten lang gerührt. Danach werden 24,8 g vollentsalztes Wasser und 218,32 g Titandioxid vom Rutiltyp zugegeben und weitere 15 Minuten mittels eines Dissolvers vorhomogenisiert, das Ganze 24 Stunden ruhen lassen und dann mit Perlen auf einer Perlmühle vom Typ "Drais PM 1" 30 Minuten lang bei ca. 40°C vermahlen. Man trennt danach das Lackkonzentrat über ein Perlensieb von den Perlen und läßt auf Raumtemperatur abkühlen. 128,5 g eines derartigen Lackkonzentrates werden mit 32,22 g eines hochreaktiven iminofunktionellen Melaminharzes, berechnet als in 100%iger Form vorliegend, 5,66 g Butoxyethanol, 2,26 g Ethanol und 27,78 g vollentsalztem Wasser gut verrührt. Man

läßt diesen Lack zur Entlüftung 24 Stunden ruhen und verdünnt ihn danach mit einem Gemisch aus vollentsalztem Wasser und Ethanol im Gewichtsverhältnis 7 : 3 auf eine Viskosität von ca. 30 DIN-4-sec.

Der Lack wird mit einer Spritzpistole auf ein mit einer Grundierung vorbehandeltes Blech in einer derartigen Menge aufgetragen, daß nach dem Einbrennen ein Lackfilm in einer Schichtstärke von eta 35 µm resultiert. Nach dem Spritzen beläßt man das lackierte Blech 10 Minuten bei Raumtemperatur, trocknet weitere 10 Minuten bei 80°C vor und brennt dann 20 Minuten bei 140°C ein. Es resultiert ein hochglänzender, hochkratzfester ebener Lackfilm mit einer Pendelhärte (nach König) von 160 sec. Das Blech wird 240 Stunden dem Schwitzkastentest nach DIN 50017 unterworfen. Der Lackfilm weist nach dieser Belastung keine Veränderungen im Glanz auf. Es sind auch keine Schäden wie Blasen, Risse, Runzeln und Farbänderungen aufgetreten.

**Patentansprüche**

**1.** Verwendung eines wäßrigen hitzehärtbaren Überzugsmittels auf Polyester- und Acrylharzbasis, im Gemisch mit Aminharz und Neutralisationsmittel, das übliche Lackzusatzstoffe, Pigmente , Füllstoffe und/oder organische Lösemittel enthalten kann, das
als Bindemittel enthält

A) 20 - 45 Gew.-% (bezogen auf den Festkörpergehalt des Bindemittels) eines Aminharzvernetzers und
B) 80 - 55 Gew.-% (bezogen auf den Festkörpergehalt des Bindemittels) eines nach Neutralisation mit Basen wasserlöslichen Polyesteroligomer-Polyacrylats mit einem Zahlenmittel des Molekulargewichts (Mn) von 800 bis 2000, hergestellt durch radikalische Polymerisation von 80 - 50 Gew.-% mindestens

a) eines hydroxyfunktionellen (Meth)acrylsäureesters und
b) einer monofunktionellen α,β-ethylinesch ungesättigten Carbonsäure und
c) gegebenenfalls eines α,β-ethylenisch ungesättigten Monomeren ohne funktionelle Gruppen in 20 bis 50 Gew.-% eines hydroxyfunktionellen, radikalisch nicht polymerisierbaren Polyesteroligomeren, erhältlich durch Polykondensation ausschließlich von aliphatischen Diolen, cycloaliphatischen Diolen, Dicarbonsäuren und deren Derivaten, mit aliphatischen Triolen oder Tetrolen mit 2 mit 6 kohlenstoffatomen, mit einem errechneten Molekulargewicht von 200 bis 1000, einer Hydroxylzahl von 280 bis 600 und einer Säurezahl von 0 bis 1,5
wobei die Monomeren a), b) und c) in derartigen Mengen eingesetzt werden, daß das erhaltene Polyesteroligomer-Polyacrylat eine Hydroxylzahl von 150 bis 390 und eine Säurezahl von 16 bis 40 aufweist, als klarlacke oder farbige Einschichtdecklecke bei der Herstellung von Mehrschichtlackierungen in der Automobilindustrie.

**2.** Verwendung nach Anspruch 1, dadurch gekennzeichnet, daß das Polyesteroligomer-Polyacrylat hergestellt wurde durch radikalische Polymerisation der Monomeren a), b) und c) in einer Lösung des Polyesteroligomeren in einem mit Wasser verträglichen bzw. in Wasser löslichen Lösemittels.

**3.** Verwendung nach Anspruch 2, dadurch gekennzeichnet daß das wasserlösliche Lösemittel ein aliphatischer Monoalkohol mit 2 bis 4 Kohlenstoffatomen oder ein Glykolether ist.

**4.** Verwendung nach einem der vorhergehenden Ansprüche, dadurch gekennzeichnet daß der hydroxyfunktionelle (Meth)acrylsäureester der Komponente B) a) Polypropylenglykolmonomethacrylat, 4-Hydroxybutylacrylat oder ein Hydroxyethylacrylat-Caprolacton-Addukt ist.

**5.** Verwendung nach einem der vorhergehenden Ansprüche, dadurch gekennzeichnet, daß das überzugsmittel in Form eines Klarlacks ohne Pigmente und Füllstoffe vorliegt.

**6.** Verfahren zur Herstellung eines wäßrigen hitzehärtbaren Überzugsmittels wie es in einem der vorhergehenden Ansprüche definiert wurde
dadurch gekennzeichnet, daß man 20 bis 50 Gew.-% eines hydroxyfunktionellen radikalisch nicht polymerisierbaren Polyesteroligomeren, erhältlich ausschließlich aus aliphatischen Diolen, cycloaliphatische Diolen, Dicarbonsäuren und deren Derivaten, mit aliphatischen Triolen oder Tetrolen mit 2 bis 6 kohlenstoffatomen, mit einem errechneten Molekulargewicht von 200 bis 1000, einer OH-Zahl von 280 bis 600, einer Säurezahl von 0 bis 1,5 vorlegt und in diesem Polyesteroligomeren 80 bis 50 Gew.-% mindestens

a) eines hydroxyfunktionellen (Meth)acrylsäureesters und

b) einer monofunktionellen $\alpha,\beta$-ethylenisch ungesättigten Carbonsäure und gegebenenfalls

c) eines (Meth)acrylsäureesters von Alkoholen mit 1 bis 12 Kohlenstoffatomen in der kette, in Anwesenheit eines Radikalinitiators polymerisiert, wobei die Monomeren a), b) und c) in derartigen Mengen eingesetzt werden, daß das erhaltene Polyesteroligomer-Polyacrylat eine OH-Zahl von 150 bis 390 und eine Säurezahl von 16 bis 40 aufweist,

worauf man 80 bis 55 Gewichtsteile des erhaltenen Polyesteroligomer-Polyacrylats mit 20 bis 45 Gewichtsteilen eines Aminharzvernetzers sowie gegebenenfalls mit üblichen Lackzusatzstoffen, Pigmenten, Füllstoffen und/oder organischen Lösemitteln vermischt.

**7.** Verfahren nach Anspruch 6, dadurch gekennzeichnet, daß man die radikalische Polymerisation in dem Polyesterooligomeren gelöst in einem mit Wasser verträglichen oder in Wasser löslichen Lösemittel durchführt.

**8.** Verfahren nach Anspruch 7, dadurch gekennzeichnet, daß als mit Wasser mischbare Lösemittel ein aliphatischer Monoalkohol mit 2 bis 4 Kohlenstoffatomen verwendet wird.

## Claims

**1.** Use of an aqueous heat-curable coating composition based on polyester and acrylic resin, in a mixture with amine resin and neutralising agent, which may contain conventional lacquer additives, pigments, fillers and/or organic solvents, which contains as binder

A) 20 - 45 % w/w (based on the solids content of the binder) of an amine resin crosslinking agent and

B) 80 - 55 % w/w (based on the solids content of the binder) of a polyester oligomer-polyacrylate which is water-soluble after neutralisation with bases, with a number average molecular weight (Mn) of 800 to 2000, produced by radical polymerisation of

80 - 50 % w/w of at least

a) one hydroxyfunctional (meth)acrylate and

b) one monofunctional, $\alpha,\beta$-ethylenically unsaturated carboxylic acid and

c) optionally one $\alpha,\beta$-ethylenically unsaturated monomer without functional groups

in 20 to 50 % w/w of a hydroxyfunctional, non-radically polymerisable polyester oligomer, obtainable by polycondensation of only aliphatic diols, cycloaliphatic diols, dicarboxylic acids and their derivatives, with aliphatic triols or tetrols having 2 to 6 carbon atoms, with a calculated molecular weight of 200 to 1000, a hydroxyl number of 280 to 600 and an acid value of 0 to 1.5, whereby the monomers a), b) and c)are used in quantities such that the polyester oligomer polyacrylate obtained exhibits a hydroxyl number of 150 to 390 and an acid value of 16 to 40, as clear lacquers or coloured single layer finishing lacquers for the production of multi-coat lacquerings in the automotive industry.

**2.** Use according to claim 1, characterised in that the polyester oligomer polyacrylate was produced by radical polymerisation of the monomers a), b) and c) in a solution of the polyester oligomer in a solvent which is compatible with water or soluble in water.

**3.** Use according to claim 2, characterised in that the water-soluble solvent is a aliphatic monoalcohol with 2 to 4 carbon atoms or a glycol ether.

**4.** Use according to one of the above claims, characterised in that the hydroxyfunctional (meth)acrylate of component B) a) is polypropylene glycol monomethacrylate, 4-hydroxybutyl acrylate or a hydroxyethyl acrylate-caprolactone adduct.

**5.** Use according to one of the above claims, characterised in that the coating composition is in the form of a clear lacquer without pigments and fillers.

**6.** Process for the production of an aqueous, heat-curable coating composition as defined in one of the above claims, characterised in that 20 to 50 % w/w of a hydroxyfunctional, non-radically polymerisable polyester oligomer, obtainable from only aliphatic diols, cycloaliphatic diols, dicarboxylic acids and their derivatives, with aliphatic triols or tetrols having 2 to 6 carbon atoms, with a calculated molecular weight of 200 to 1000, an OH number of 280 to 600 and an acid value of 0 to 1.5 is taken an in this polyester oligomer

80 to 50 % w/w of at least

a) one hydroxyfunctional (meth)acrylate and
b) one monofunctional α,β-ethylenically unsaturated carboxylic acid and optionally
c) one (meth)acrylate of alcohols with 1 to 12 carbon atoms in the chain
are polymerised in the presence of a radical initiator, whereby the monomers a), b) and c) are used in quantities such that the polyester oligomer polyacrylate obtained exhibits an OH number of 150 to 390 and an acid value of 16 to 40,
whereupon 80 to 55 parts by weight of the polyester oligomer polyacrylate obtained is mixed with 20 to 45 parts by weight of an amine resin crosslinking agent and optionally with conventional lacquer additives, pigments, fillers and/or organic solvents.

**7.** Process according to claim 6, characterised in that the radical polymerisation is conducted in the polyester oligomer dissoved in a solvent which is compatible with water or soluble in water.

**8.** Process according to claim 7, characterised in that an aliphatic monoalcohol with 2 to 4 carbon atoms is used as the water-miscible solvent.

**Revendications**

**1.** Utilisation d'une composition de revêtement aqueuse thermodurcissable à base de polyester et d'une résine acrylique, en mélange avec une résine d'amine et un agent de neutralisation, et pouvant contenir des additifs usuels pour vernis, des pigments, des charges et/ou des solvants organiques, qui contient en tant que liant:

A) de 20 à 45 % en poids (par rapport à l'extrait sec du liant) d'un agent de réticulation du type résine d'amine et
B) de 80 à 55 % en poids (par rapport à l'extrait sec du liant) d'un oligoester/polyacrylate soluble dans l'eau après neutralisation avec des bases, ayant une masse moléculaire moyenne en nombre (Mn) de 800 à 2000, que l'on prépare par polymérisation radicalaire
de 80 à 50 parties en poids d'au moins

a) un ester hydroxy-fonctionnel de l'acide (méth)acrylique et
b) un acide carboxylique monofonctionnel à insaturation α,β-éthylénique, et éventuellement
c) un monomère à insaturation α,β-éthylénique sans groupes fonctionnels,

dans 20 à 50 parties en poids d'un oligoester hydroxy-fonctionnel, ne pouvant subir de polymérisation radicalaire, et pouvant être préparé par polycondensation seulement de diols aliphatiques, de diols cycloaliphatiques, d'acides dicarboxyliques et leurs dérivés, avec de triols et tetrols aliphatiques ayant de 2 à 6 atomes de carbone, ayant une masse moléculaire calculée de 200 à 1000 et de préférence de 300 à 600, un indice d'hydroxyle de 280 à 600 et de préférence de 400 à 500, et un indice d'acide de 0 à 1,5, les monomères a), b) et c) étant utilités en des quantités telles que l'oligoester/polyacrylate obtenu ait un indice d'hydroxyle de 150 à 390 et un indice d'acide de 16 à 40,
comme vernis transparents ou vernis de finition de monocouche coloré pour fabriquer des laquages multicouches dans l'industrie automobile.

**2.** Utilisation selon la revendication 1, caractérisée en ce que l'oligoester/polyacrylate a été préparé par polymérisation radicalaire des monomères a), b) et c) dans une solution de l'oligoester dans un solvant compatible avec l'eau ou soluble dans l'eau.

**3.** Utilisation selon la revendication 2, caractérisée en ce que le solvant soluble dans l'eau est un monoalcool aliphatique ayant de 2 à 4 atomes de carbone, ou un glycoléther.

**4.** Utilisation selon l'une des revendications précédentes, caractérisée en ce que l'ester hydroxy-fonctionnel de l'acide (méth)acrylique correspondant au constituant B) a) est le monométhacrylate de polypropylèneglycol, l'acrylate de 4-hydroxybutyle ou un produit d'addition de l'acrylate d'hydroxyéthyle et de la caprolactone.

**5.** Utilisation selon l'une des revendications précédentes, caractérisée en ce que la composition de revêtement se présente sous forme d'un vernis transparent sans pigments ni charges.

**6.** Procédé pour préparer une composition de revêtement aqueuse thermodurcissable comme défini dans l'une des revendications précédentes, caractérisée en ce qu'on place dans le réacteur:
de 20 à 50 % en poids d'un oligoester à fonctionnalité hydroxy, ne pouvant subir de polymérisation radicalaire, que l'on peut obtenir à partir seulement de diols aliphatiques, de diols cycloaliphatiques, d'acides dicarboxyliques et de leurs dérivés, avec de triols et tetrols aliphatiques ayant de 2 à 6 atomes de carbone, ayant une masse moléculaire calculée de 200 à 1000, un indice d'hydroxyle de 280 à 600, un indice d'acide de 0 à 1,5, et que, dans cet oligoester, on polymérise 80 à 50 % en poids d'au moins

a) un ester à fonctionnalité hydroxy de l'acide (méth)acrylique, et
b) un acide carboxylique monofonctionnel à insaturation $\alpha,\beta$-éthylènique, et éventuellement
c) un ester de l'acide (méth)acrylique et d'alcools ayant de 1 à 12 atomes de carbone dans leur chaîne,
en présence d'un amorceur radicalaire, les monomères a), b) et c) étant utilisés en des quantités telles que l'oligoester/polyacrylate obtenu ait un indice hydroxyle de 150 à 390 et un indice d'acide de 16 à 40,
ce après quoi on mélange à une quantité de 80 à 55 parties en poids de l'oligoester/polyacrylate obtenu 20 à 45 parties en poids d'un agent de réticulation du type résine d'amine, et éventuellement des additifs usuels pour vernis, des pigments, des charges et/ou des solvants organiques.

**7.** Procédé selon la revendication 6, caractérisé en ce qu'on procède à la polymérisation radicalaire dans l'oligoester dissous dans un solvant compatible avec l'eau ou soluble dans l'eau.

**8.** Procédé selon la revendication 7, caractérisé en ce qu'on utilise comme solvant miscible à l'eau un monoalcool aliphatique ayant de 2 à 4 atomes de carbone.